# EUROPEAN PATENT APPLICATION

(11) **EP 1 705 881 A1**
(43) Date of publication of application: **27.09.2006**
(21) Application number: 06005949.0
(22) Date of filing: 23.03.2006
(51) Int. Cl.: H04M 1/725

(54) **Mobile communication terminal and method for displaying and transmitting idle screen display message**

(30) Priority: 23.03.2005 KR 20050024303
(71) Applicant: LG Electronics Inc., Seoul 150-721 (KR)
(72) Inventor: Cho, Woon Rae, Seoul (KR)
(74) Representative: Urner, Peter

(57) **Abstract**

A mobile communication terminal and a method for display an idle screen message are disclosed. When an idle screen message is received, the message is displayed on an idle screen. If the message is a short message, the message is displayed as a phrase of the idle screen, and if the message is a multimedia message, the message is displayed as a background image of the idle screen.

## Description

### FIELD OF THE INVENTION

The present invention relates to a mobile communication terminal ("terminal") and a method for displaying a message.

### BACKGROUND OF THE INVENTION

As technologies for terminals rapidly advance, terminals provide even more diverse functions to meet users' demands, such as providing a camera.

Currently, terminals serve as mobile information devices beyond the basic function of voice communication. Accordingly, many functions are being added to the terminals. However, the display s creen shows terminal status, call information, or an image when the terminal is idle.

Also when the terminal is idle, a user may enter characters for display by entering the characters directly from a keypad, and the user may overwrite the displayed characters by entering new characters. The characters may form a short message without having any particular effect other than being displayed.

### SUMMARY OF THE INVENTION

In accordance with one aspect of the present invention, a mobile communication terminal is disclosed comprising: a display unit; a receiving unit for receiving a message; a determining unit for checking whether an identifier is present in the received message; and a controller for controlling the display unit to display a message on an idle screen if the received message includes an identifier.

The identifier may be included in content of the message or in a particular field of a message format; and the message may be a text message, a multimedia message, or an email. When the message is a text message or an email message, the controller may display the content of the message as a phrase of an idle screen. When the message is a multimedia message, the controller may display a file contained in the multimedia message on the idle screen.

The terminal further comprises a memory unit for storing one or more phone numbers from which messages will be permitted to be displayed on the idle screen. The determining unit compares phone numbers stored in the memory with the identifier contained in the message, and if the message identifier matches one of the phone numbers, the determining unit provides a permission signal for displaying the received message on the idle screen.

If the received message identified does not match one of the phone numbers stored in memory, the user will be presented with an option to add the phone number to memory to permit the display of future messages from that phone number, an to display the currently received message, or to reject the display of the currently received message

In accordance with another aspect of the present invention, a mobile communication terminal is disclosed comprising: a display unit, a receiving unit for displaying a message; a determining unit for checking whether the message received from the receiving unit includes an identifier; and a controller for controlling the display unit to display the message on an idle screen according to a user selection when the message includes an identifier.

The terminal may additionally comprise an input unit for a user to select whether or not to display the message on the idle screen.

In accordance with yet another aspect of the present invention, a mobile communication terminal is disclosed comprising: an input unit for creating a message; a controller for converting the created message into an idle screen display message for display on a terminal of another party; and a transmission unit for transmitting the idle screen display message to the other party.

In accordance with still yet another aspect of the present invention, a method for displaying a message on an idle screen is disclosed, the method comprising: receiving a message; checking whether the received message includes an identifier; and displaying the message on the idle screen if the message has an identifier.

In accordance with a still yet an additional aspect of the present invention, a method for displaying a message on an idle screen is disclosed, the method comprising: receiving a message; checking whether the received message contains an identifier; deciding whether to display the received message responsive to the identifier; and displaying the message on the idle screen of the display unit according to decision.

In accordance with a further aspect of the present invention, method for transmitting an idle screen display message is disclosed, the method comprising: converting a created message into an idle screen display message for display on anther parties display; and transmitting the idle screen display message.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The invention will be described in detail with reference to the following drawings in which like reference numerals refer to like elements.

FIG. I is a schematic block diagram showing the construction of a mobile communication terminal in accordance with one embodiment of the present invention.

FIG. 2 is a flow chart illustrating steps for transmitting an idle screen display message in accordance with one embodiment of the present invention.

FIG. 3 shows a short message, which has been converted into the idle screen display message and transmitted in accordance with one embodiment of the present invention.

FIG. 4 shows a screen displaying a short message and an identifier in accordance with one embodiment of the present invention.

FIG. 5 is a block diagram for explaining an example of including an identifier in a packet of the short message in FIG. 4.

FIG. 6 is a flow chart illustrating the sequential method for displaying a message on an idle screen of a mobile communication terminal in accordance with one embodiment of the present invention.

Figs. 7A to 7C are views showing a short message displayed on an idle screen in accordance with one embodiment of the present invention.

FIG. 8 is shows a multimedia message containing an image file for conversion into an idle screen display message and then transmitted in accordance with another embodiment of the present invention.

FIGs. 9A and 9B shows a multimedia message containing an image file displayed as an idle screen display message in accordance with another embodiment of the present invention.

FIG. 10 is shows example of a multimedia message containing an image file inserted into an empty space of an idle screen.

### DETAILED DESCRIPTION OF THE EMBODIMENTS

Exemplary embodiments of the present invention will be described herein below with reference to the accompanying drawings. The present invention provides a mobile communication terminal for displaying a message on an idle screen, a method for displaying a message on an idle screen, and a method for transmitting an idle screen display message.

One object of the present invention is to display a message on an idle screen of another's terminal. Another object is to display a received message on an idle screen.

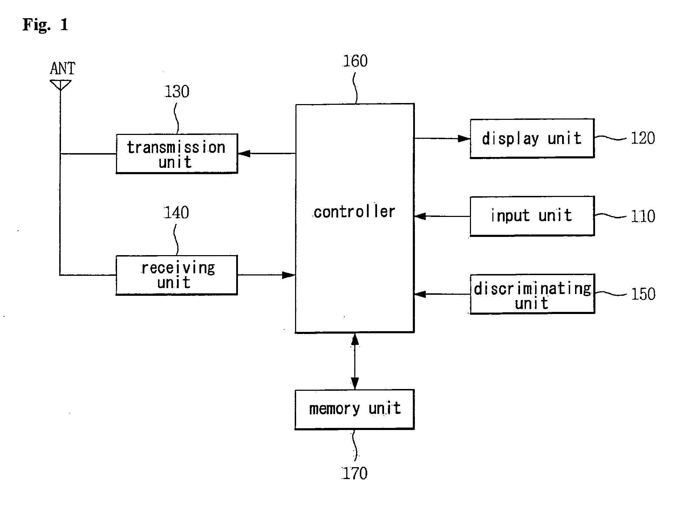

FIG. 1 is a schematic block diagram showing the construction of a mobile communication terminal in accordance with one embodiment of the present invention. In FIG. 1, the mobile communication terminal in accordance with one embodiment of the present invention comprises an input unit 110, a display unit 120, a transmission unit 130, a receiving unit 140, a discriminating unit 150, a controller 160 and a memory unit 170.

The input unit 110 allows a user to create a message or to enter terminal phone numbers for allowing received messages to be displayed on an idle screen. In case of a plurality of idle screen display messages, the user can selectively output a command signal for discontinuing or stopping.

The display unit 120 displays a key input signal generated from the input unit 110 and various information signals transferred from the controller 160. In addition, the display unit 120 displays one or more of a conversion menu or a conversion button and an idle screen display message menu for selecting conversion of the message into an idle screen display message.

Also, the display unit 120 displays a message transmitted from a permitted terminal on an idle screen under the control of the controller 160.

The transmission unit 130 communicates with a base station through an antenna ANT to transmit a radio signal containing the idle screen display message to the base station. In this case, the transmission unit 130 comprises a local area communication module for directly transmitting the message through a Local Area Network (LAN).

The receiving unit 140 communicates with the base station through the antenna ANT to receive the radio signal containing an idle screen display message. In this case, the receiving unit 140 comprises a local area communication module for directly receiving the message through the LAN.

The discriminating unit 150 checks whether the message received through the receiving unit 140 includes an identifier, and if the message includes an identifier, the discriminating unit 150 provides a signal to the controller 160.

The controller 160, comprising an MSM (Mobile Station Modem), controls a general operation of the mobile communication terminal and converts the message created through the input unit 110 into an idle screen display message for transmission to and display on another's terminal's idle screen.

In addition, the controller 160 controls the display unit 120 to display the received message on the idle screen according to a signal inputted from the discriminating unit 150.

The memory unit 170 stores programs for the general operation of the terminal and various data inputted/outputted or processed while the programs are being performed. In addition, the memory unit 170 stores an identifier for identifying the idle screen message inputted from the input unit 110 and a phone number of a another's terminal permitted for displaying the idle screen messages on the user's terminal..

The method for displaying a message on an idle screen and the method for transmitting the idle screen display message in accordance with one embodiment of the present invention will be described as follows.

### Method for transmitting a single short message as an idle screen display message

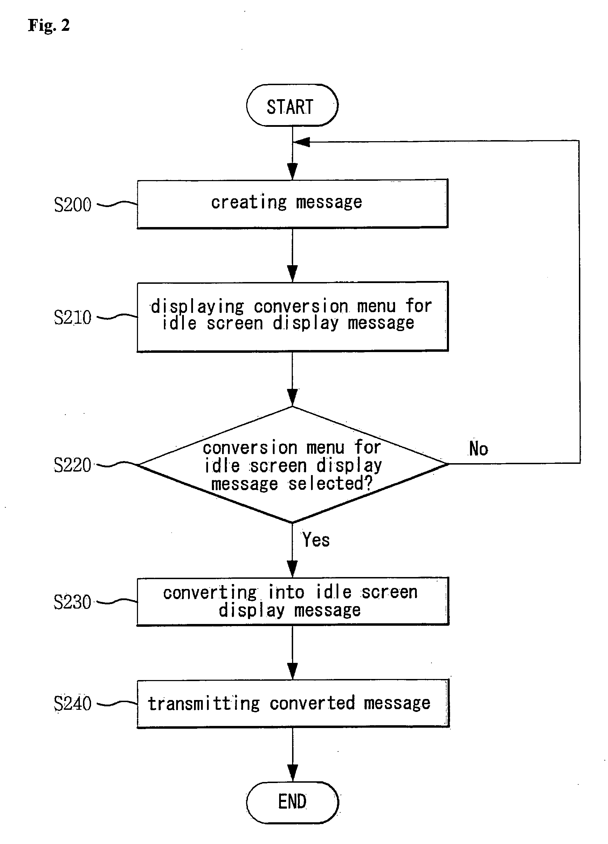

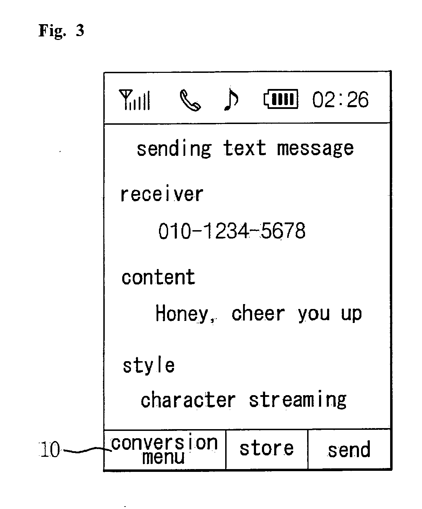

FIG. 2 is a flow chart illustrating the sequential steps for transmitting an idle screen display message in accordance with one embodiment of the present invention, and FIG. 3 is a shows an image of a short message that has been converted into the idle screen display message and transmitted in accordance with one embodiment of the present invention.

The method for transmitting an idle screen display message comprises creating a message (step S200), converting the created message into an idle screen display message to be displayed on another's terminal idle screen (steps S210~S230), and transmitting the converted idle screen display message (step S240).

As shown in FIG. 3, when the user starts creating a short message by using the input unit 110 (step S200 of Fig. 2), the controller 160 displays a conversion menu 10 for converting the corresponding short message into an idle screen display message (step 5210). After the user creates content of the short message such as 'Honey, cheer you up' by using the input unit 110, the controller 160 checks whether the user selects the conversion menu 10 displayed at one side of the display unit 120 (step S 220). U pon selecting the conversion menu 10, the controller 160 converts the created short message into the idle screen display message (step S230).

In this case, the controller can convert the created short message into the idle screen display message by assigning a certain identifier to a particular field of a packet format of the corresponding short message.

In this manner, the short message created by the user is converted into the idle screen display message, and content of the short message is displayed as a phrase on another's terminal idle screen. In this case, the user can designate a display style of the phrase of the corresponding idle screen by using the input unit 110.

Namely, when the user designates the style as 'character streaming' by using the input unit 110, if a certain style code corresponding to a style, for example, a determined style code corresponding to the 'character streaming', is '1', the controller 160 adds it to the particular field of the packet format of the short message.

The short message, having been converted into the idle screen display message by containing the identifier in the packet format by the controller, is transmitted to a phone number of a 'receiver' through the transmission unit 130 (step S 240). A s mentioned above, the controller 160 may add the identifier in a different position as follows.

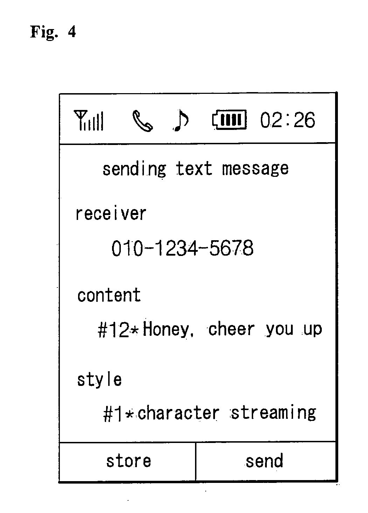

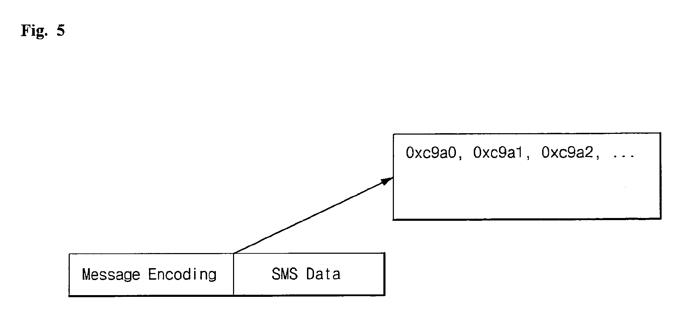

FIG. 4 shows a screen having an identifier of a short message in accordance with one embodiment of the present invention, and FIG. 5 is a block diagram for explaining including an identifier in a packet of the short message in FIG. 4.

When the user creates content of the message as 'Honey, cheer you up' by using the input unit 110, the controller 160 may assign an identifier #12* to a first portion of the content of the short message. In addition, the controller may designate a style of the short message by assigning a style code #1 * in front of a start point of the style of 'character streaming'.

In this case, as shown in FIG. 5, the controller adds the identifier by using about 8 to 12 bytes at the front of the text message created by the user.

The controller places the identifier as the first portion of the content of the short message and the style code in front portion of the starting point of the style, but the present invention is not limited thereto. Namely, the identifier may be assigned to an end portion of the content of the short message and the style code may be also assigned an end point of the style. That is, the identifier and the style code can be assigned any position.

Access to the conversion menu 10 for converting the short message into the idle screen display message may be part of the display unit 120, wherein an idle screen display message menu having the same function can be displayed, or a conversion button can be provided.

Differently, when the user changes the idle screen of the terminal by using the input unit 110, the controller 160 may generate a corresponding idle screen display message and transmit it to another user, wherein the controller generates the idle screen display message in the same manner as described above.

### Method for displaying a single short message on an idle screen

A method for displaying the corresponding short message that has been created according to the afore-mentioned method on an terminal idle screen the receiver will be described as follows.

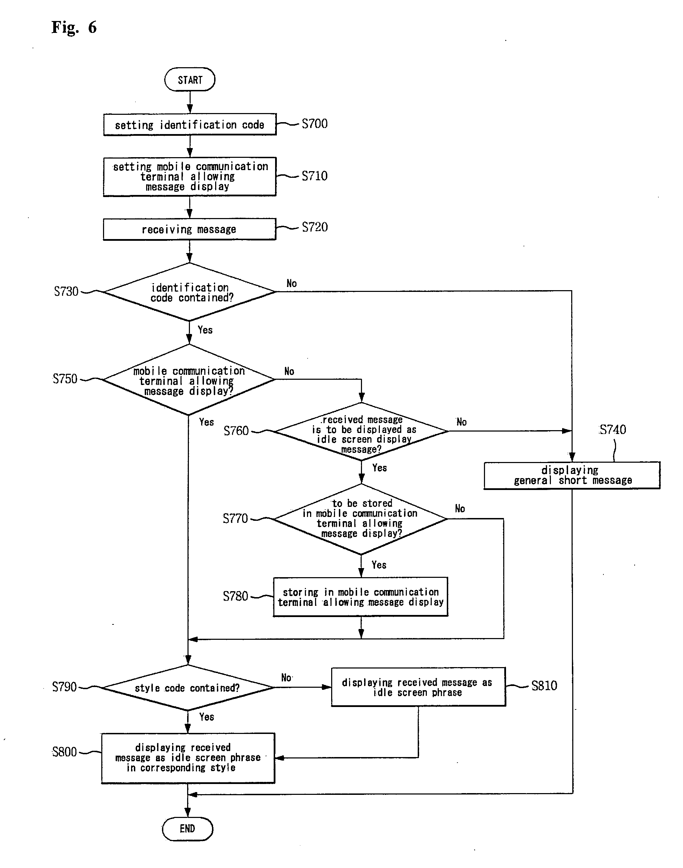

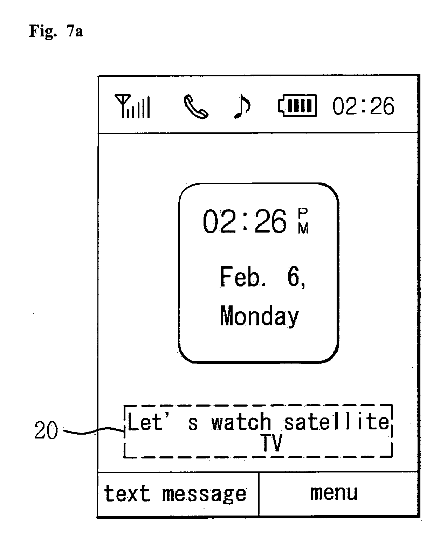

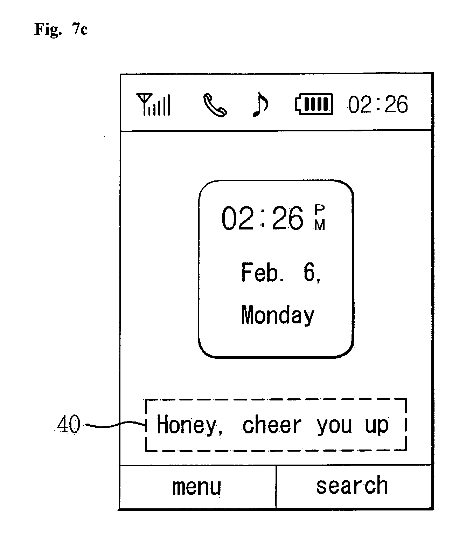

FIG. 6 is a flow chart illustrating the steps for displaying a message on an terminal idle screen in accordance with one embodiment of the present invention, and FIGs. 7A-C are views illustrating a display of the short message displayed on the idle screen in accordance with one embodiment of the present invention.

As shown in FIG. 6, the method for displaying the terminal message in accordance with one embodiment of the present invention comprises the message (steps S700~S720), checking whether the received message contains an identifier (steps S730~S790), displaying the message (steps S800 and S810) on the idle screen when the message contains an identifier.

First, the memory unit 170 stores the identifier for identifying that the received message is an idle screen display message, and a style code corresponding to a style of the message (step S700). Descriptions for the identifier and the style code are discussed above.

The user stores one or more phone numbers of terminals permitted for transmitting of the idle screen display message in the memory unit 170 (step S710) using the input unit 110.

Thereafter, as shown in FIG. 7A, when the terminal is in an idle state, an idle screen is displayed. An idle state is when the terminal waits for transmitting or receiving a call signal. In this state, a pre-set idle screen is displayed on the display unit 120 without user interaction.

For example, an idle screen phrase 'Let's watch a satellite TV' (20) is set on the idle screen of the display unit 120. In this state, when a short message is received through the receiving unit 140 (step S720), the discriminating unit 160 checks whether the message contains an identifier in a particular field of short message the packet format (step S730).

For example, the discriminating unit 150 determines the identifier such that it recognizes the next coming character as a character to be seen on the idle screen. In this case, the discriminating unit 150 may check whether the identifier is contained in content of the corresponding short message. Namely, as shown in FIG. 6, if the identifier is contained at about 8-12 bytes in front of the data of the received text message, the discriminating unit 150 recognizes it as the identifier.

If the received short message does not contain the identifier, the discriminating unit 150 outputs a corresponding signal to the controller 160. Then, the controller recognizes the received short message as a general short message and displays it on the display unit 150 (step S740).

If, however, the s hort message contains an identifier, the discriminating unit 150 then determines whether the user has previously stored the phone number of the corresponding short message in the memory unit 170 thereby permitting the idle screen to display the message (step S750). If the message phone number has not previously

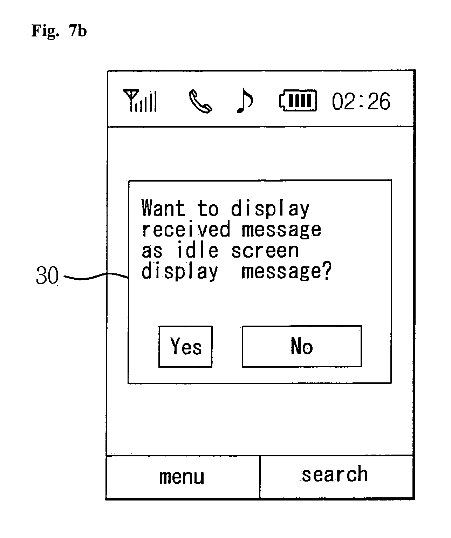

In c ase that t he identifier i s contained in the packet format of the s hort message or in the content of the short message but the caller's phone number has not previously been stored to permitting the idle screen to display the message, the discriminating unit 150 outputs a corresponding message to the controller 160. U pon receiving the signal from the discriminating unit 150, as shown in FIG. 7B, the controller 160 controls the display unit 120 to display a message 'Want to display received message on idle screen?' (30) (step S760).

When the user selects displaying of the short message on the display unit 120, the controller 160 selectively displays a message asking whether to store the caller's phone number to permit future the idle screen display messages (step S770).

When the user selects storing of the caller's phone number by using the input unit 110, the controller 160 stores the phone number as a phone number permitted for displaying an idle screen display message and stores it in the memory unit 170 (step S480).

The controller 160 then checks whether a style code is contained in the short message packet format (step S790). If the style code is contained in the message, the controller displays the message as a phrase of the idle screen according to a style corresponding to the style c ode (step S 800). As shown i n FIG. 7C, the s hort message 'Honey, cheer you up-' (40) is displayed according to the style set by the sender. In this case, the sender has set the style code corresponding to 'character streaming', the controller 1 60 controls su ch that the idle s creen phrase Honey, c heer you u p' (40) is displayed in a streaming manner from right to left of the screen.

If, however, the style code is not contained in the short message packet (step S790), the controller 160 displays the received message as the idle screen phrase in no particular style (step S810). The controller 160 may alternatively display the idle screen phrase according to a style arbitrarily set by the user (receiver).

The idle screen phrase comprises one of characters, numbers, special symbols, a sentence, a phrase and an icon, or their combination on the idle screen.

Alternatively, the controller 160 may display an acknowledge message asking whether to display the received message on the idle s creen o n the display unit 120). When the user selects displaying of the message as the idle screen display message by using the input unit 110, the controller 160 may display the message as the idle screen display message on the display unit 120.

### Method for displaying a plurality of short messages on the idle screen

When a plurality of short messages are received by the receiving unit 140, the controller 160 checks whether the plurality of short messages contain an identifier, respectively, in the manner as described above. If the short messages do not contain an identifier, the short messages are recognized as general short messages according to the above-mentioned procedure, and it is determined whether the messages are to be displayed on the display unit 120 or as idle screen display messages.

If one or more of the short messages is/are determined to be idle screen display messages, the idle screen can be displayed in several ways as follows.

For example, in case where a short message of 'Honey, cheer you up-' is received and then a short message of 'Go for it-' is received, the controller 160 can display the short message 'Honey, cheer you up-' on the idle screen, and then, replace it with the next received short message 'Go for it-' to be displayed on the idle screen.

Alternatively, the controller 160 can display the two short messages on the idle screen with a certain time difference (lapse) between them. For example, the short message 'Honey, cheer you up~' is displayed on the idle screen, and then, the short message 'Go for it-' is displayed on the idle screen after five seconds, and thereafter, the short message 'Honey, cheer you up~' is again displayed on the idle screen after a further five seconds. In this manner, when the short messages are idle screen display messages, they can be alternately displayed repeatedly on the idle screen with a certain time difference between the messages.

In addition, the controller 160 can selectively display content of the received short messages randomly. Also, the controller 160 can display content of the plurality of short messages according to a user selection. The controller 160 may also display the messages in a priority established by the user according to the phone numbers of the received messages. The controller 160 may preferentially set an idle screen display message received from a phone number of a terminal with a set priority level.

Displaying of the plurality of short messages as idle screen display messages can be changed according to a user setting.

### Method for transmitting a multimedia message containing a single image file as an idle screen display message

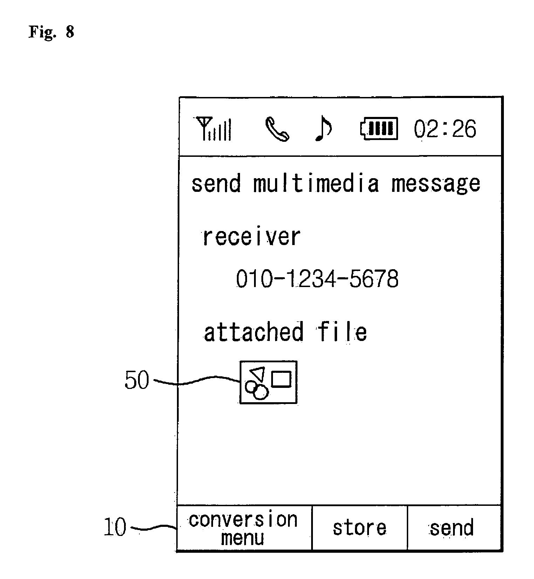

FIG. 8 is illustrates a state that a multimedia message containing an image file is converted into an idle screen display message and then transmitted in accordance with another embodiment of the present invention. An image file 50 is added to a multimedia message that is to be converted into an idle screen display message and then transmitted. The user can then transmit the multimedia message as the idle screen display message in the same manner as described above with reference to FIG. 2.

When the user complete creating of the multimedia message by adding the image file 50 and selects the conversion menu 10, the controller 160 converts the corresponding multimedia message into the idle screen display message and transmits it.

### Method for displaying a multimedia message containing a single image file on the idle screen

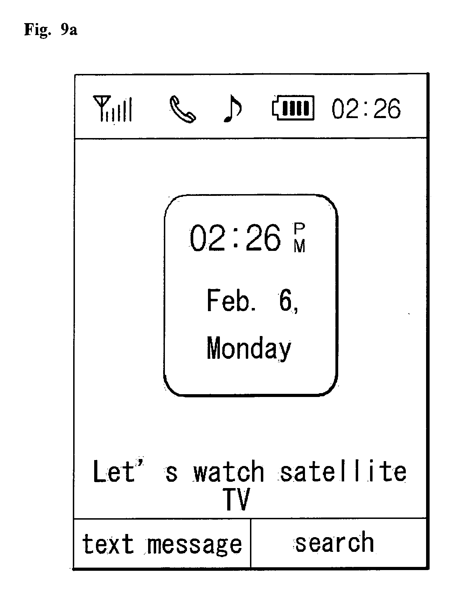

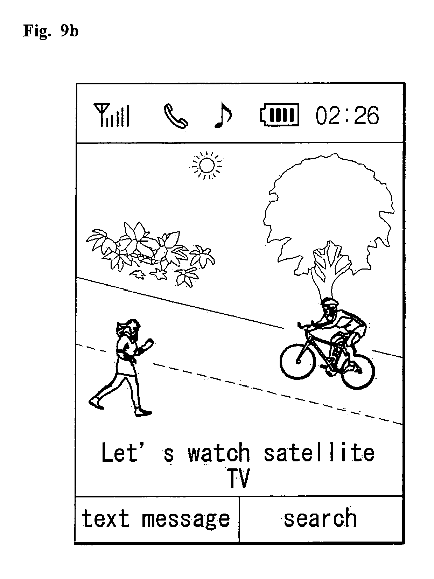

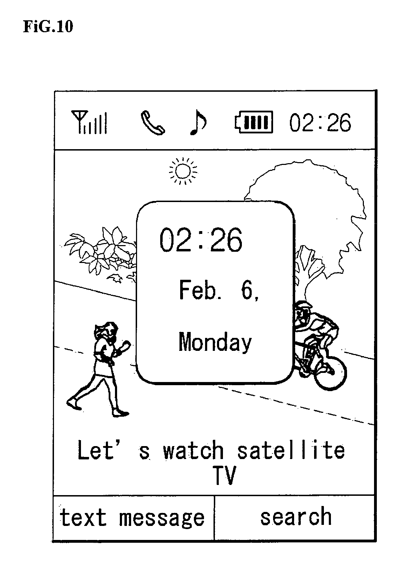

FIGs. 9A and 9B are illustrate a state of the multimedia message containing the image file displayed as the idle screen display message in accordance with another embodiment of the present invention. With reference to FIG. 10A, the procedure in which the receiving unit 140 receives the multimedia message and the controller 160 checks whether the corresponding multimedia message contains an identifier is performed in the same manner as described above.

When the multimedia message is received, the controller 160 displays the image file contained in the multimedia message on the idle screen. Namely, the controller 160 changes the idle screen displayed as shown in FIG. 9A to the image file contained in the received multimedia message as shown in FIG. 9B and displays the image file. Alternatively, the controller 160 can display an image as shown in FIG. 10.

FIG. 10 illustrates an example of a multimedia message containing the image file is inserted into an empty space of the idle screen. As shown in FIG. 10, the controller 160 can insert the image file contained in the multimedia message in the empty space of the idle screen. Namely, the controller 160 inserts the corresponding image file in the empty space of the initially set idle screen.

### Method for displaying a plurality of multimedia messages each containing an image file on the idle screen

When a plurality of multimedia messages are received by the receiving unit 140, the controller 160 checks whether the corresponding multimedia messages contain an identifier, respectively, in the same manner as described with reference to FIG. 6. Thereafter, in order to display the plurality of multimedia messages on the idle screen, the controller 160 may sequentially display the plurality of multimedia messages in the order they are received. Namely, an image file of a first received multimedia message is first displayed on the idle screen, and an image file of a subsequently received message is then displayed. This process is sequentially repeated. The controller 160 may sequentially display the image files contained in the plurality of multimedia messages on the idle screen with a time delay between displays.

The image file contained in the first received multimedia message is displayed, and then, image files contained in the subsequently received multimedia messages are sequentially displayed. When the image file contained in the last multimedia message is displayed, the image file contained in the first received multimedia message is displayed again.

Alternatively, the controller 160 may randomly select an image file contained in the plurality of received multimedia messages for display. Also, the controller may display an image file contained in the plurality of multimedia messages according to a user selection.

The methods of the present invention as described above can be also applied f or a case w here a number of image files is contained in a single multimedia message.

The above-described embodiments of the present invention describes the image file contained in a multimedia message, but the present invention is not limited thereto and a multimedia message can contain various file types such as picture, video, and audio.

Accordingly, in case where the multimedia message contains a video file, the controller 160 can display the corresponding video on the idle screen, while in case of the audio file; the controller 160 reproduces corresponding audio in the idle state.

When the user changes the terminal idle screen, the controller 160 can transmit a message for changing the terminal idle screen of another party corresponding to the changed content of the user's terminal.

In the above-described embodiments of the present invention, the created idle screen display message is transmitted/received through the mobile communication network, but the present invention is not limited thereto. That is, the user can directly transmit the created idle screen display message to the other's terminal through a LAN (Local Area Network) included in the transmission unit 130.

In addition, in the above-described embodiments of the present invention, the short message and the multimedia message are displayed as the idle screen display message, but besides, any other messages containing a text or image file such as e-mail also may be used.

As described above, because the message received from another's terminal that has been permitted by the user can be displayed as an idle screen display message, the efficiency of the message function provided on the idle screen can be enhanced. Also, since the message received from another's terminal can be displayed as the idle screen display message, the user can quickly check the received message.

The idle screen can be dynamically changed for users' convenience.

The foregoing exemplary embodiments and aspects of the invention are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A mobile communication terminal comprising:
a receiving unit wherein the receiving unit receives messages over a wireless network;
a display unit wherein the display unit displays an idle screen when the terminal waits for receiving messages;
a determining unit wherein the determining unit checks whether each received message contains an identifier; and
a controller wherein the controller displays the received message on the display unit.

2. The terminal of claim 1, wherein the content of the message contains the identifier.

3. The terminal of claim 1, wherein a field of a message format contains the identifier.

4. The terminal of claim 1, wherein the message is a text message, a multimedia message or an email message.

5. The terminal of claim 4, wherein when the message is a text message or an email message, the controller displays the content of the message as an idle screen on the display unit.

6. The terminal of claim 4, wherein when the message is a multimedia message, the controller displays a file contained in the multimedia message as an the idle screen on the display unit.

7. The terminal of claim 4, wherein the multimedia message is an image file, a video file, or a music file.

8. The terminal of claim 1, wherein the controller displays the received message on the idle screen responsive to whether the received message contains an identifier

9. The terminal of claim 8, wherein the determining unit checks whether the identifier contains a style code for displaying the received message on the idle screen, and if the received message contains the style code, the determining unit provides a signal to the controller for displaying the received message according to a style indicated by the style code.

10. The terminal of claim 1, further comprising a memory unit for storing one or more phone numbers from which the received message is permitted to be displayed on the idle screen, and when the received message is sent from a phone number that matches any of the one or more phone numbers stored in memory, the determining unit provides a permission signal to the controller allowing the received message to be displayed on the idle screen.

11. The terminal of claim 10, wherein if the phone number of the received message does not match any of the one or more phone numbers stored in memory, the controller displays a message on the idle screen requesting a decision whether to display the received message on the idle screen.

12. The terminal of claim 11, wherein if the decision is to display the received message on the idle screen, the received message is displayed and the phone number of the received message is stored in the memory.

13. The terminal of claim 1, wherein the controller requests a decision to display the received message on the idle screen prior to displaying the received message on the idle screen.

14. The terminal of claim 1, wherein the receiving unit receives the message directly from a Local Area Network (LAN).

15. A mobile communication terminal comprising:
a display unit for displaying an idle screen when the terminal waits for receiving messages;
an input unit for creating a message;
a controller for converting the created message into an idle screen message to be displayed on an idle screen of another terminal; and
a transmission unit for transmitting the idle screen message to the other's terminal.

16. The terminal of claim 15, wherein a conversion menu is displayed on the display screen, and wherein the conversion menu comprises a conversion button and the created message, and when the conversion button is selected, the controller converts the created message into the idle screen message.

17. The terminal of claim 16, wherein the controller includes an identifier into either the content of the converted message or a field of the converted message packet format.

18. The terminal of claim 16, wherein when the created message is converted to the idle screen message, the idle screen message is transmitted by the transmission unit for display on the idle screen of the other's terminal.

19. The terminal of claim 15, wherein the transmission unit comprises a local area communication module for transmitting and receiving messages directly through a Local Area Network (LAN).

20. A method for displaying a message on an idle screen comprising:
receiving a message;
checking whether the received message includes an identifier; and
displaying the message on the idle screen when the message has an identifier.

21. The method of claim 20, wherein the content of the message contains the identifier.

22. The method of claim 20, wherein a field of a message format contains the identifier.

23. The method of claim 20, wherein the message is a text message, a multimedia message or an email message.

24. The method of claim 23, wherein when the message is a text message or an email message, the controller displays the content of the message as an idle screen on the display unit.

25. The method of claim 23, wherein when the message is a multimedia message, the controller displays a file contained in the multimedia message as an the idle screen on the display unit.

26. The method of claim 23, wherein the multimedia message is an image file, a video file, or a music file.

27. The terminal of claim 20, wherein checking further comprises determining whether the identifier contains a style code for displaying the received message on the idle screen, and if the received message contains the style code, providing a signal for displaying the received message according to a style indicated by the style code.

28. The method of claim 20, further comprising further comprising storing in a memory one or more phone numbers from which the received message is permitted to be displayed on the idle screen, and when the received message is sent from a phone number that matches any of the one or more phone numbers stored in the memory, displaying the received message on the idle screen.

29. The method of claim 28, wherein if the phone number of the received message does not match any of the one or more phone numbers stored in the memory, requesting a decision whether to display the received message on the idle screen.

30. The method of claim 29, wherein if the decision is to display the received message on the idle screen, displaying the received message is and storing the phone number of the received message in the memory.

31. The method of claim 20, wherein, in the receiving step, the message is received directly from a Local Area Network (LAN).

32. A method for displaying a message on an idle screen comprising:
receiving a message;
checking whether the received message contains an identifier;
deciding whether to display the received message as the idle screen message when the message contains an identifier; and
displaying the idle screen message when the decision is to display the idle screen message.

33. A method for transmitting an idle screen message comprising:
creating a message;
converting the created message into an idle screen message for display on another's terminal idle screen; and
transmitting the idle screen message to the other's terminal.

34. The method of claim 33, wherein converting further comprises displaying a conversion menu having a conversion button and the created message, and selecting the conversion button to convert the created message into the idle screen message.

35. The method of claim 34, wherein the idle screen message includes an identifier either in the content of the converted message or in a field of the converted message packet format.

36. The method of claim 33, when the created message is converted to the idle screen message, transmitting the idle screen message for display on the idle screen of the other's terminal.

37. The method of claim 33, wherein the idle screen message is transmitted directly through a Local Area Network (LAN).
